# EUROPEAN PATENT APPLICATION

(11) **EP 3 373 222 A1**
(43) Date of publication of application: **12.09.2018**
(21) Application number: 18160797.9
(22) Date of filing: 08.03.2018
(51) Int. Cl.: G06Q 20/14, G06Q 40/00, G07D 11/00

(54) **SERVICE CHARGE CALCULATION SYSTEM AND SERVICE CHARGE CALCULATION METHOD**

(30) Priority: 10.03.2017 JP 2017045757
(71) Applicant: Glory Ltd., Hyogo 670-8567 (JP)
(72) Inventor: KATAOKA, Ryuji, Himeji-shi, Hyogo 670-8567 (JP); UEDA, Mayumi, Himeji-shi, Hyogo 670-8567 (JP); NAGAO, Mitsushi, Himeji-shi, Hyogo 670-8567 (JP)
(74) Representative: Jenkins, Peter David

(57) **Abstract**

One object is to calculate a service charge corresponding to labor of money handling. A service charge calculation system includes: a money handling unit configured to perform money handling for counting money; a time calculation unit configured to calculate a time for the money handling performed by the money handling unit; and a service charge calculation unit configured to calculate a service charge on the basis of the time calculated by the time calculation unit. Most Illustrative Drawing:

## Description

### BACKGROUND OF THE INVENTION

### Field of the Invention

The present invention relates to a service charge calculation system, a money handling apparatus, and a service charge calculation method that can calculate service charges for money handling according to labor of the money handling.

### Description of the Background Art

Conventionally, sales proceeds in commercial facilities such as supermarkets are collected by a cash in transit (CIT) company, and transferred to a cash center by an armored car. At the cash center, money handling is performed by using a money handling apparatus such that the sales proceeds are counted and it is confirmed that the counted monetary amount of the sales proceeds matches with a monetary amount of sales proceeds reported by each of the commercial facilities. A service charge for transferring the sales proceeds and a service charge for the money handling are calculated on the basis of, for example, an amount of money of the sales proceeds. Japanese Laid-Open Patent Publication No. 2003-6433 discloses a cash handling system that counts the number of banknotes and the number of coins which have been handled in each month, for each customer and for each denomination, in order to calculate the service charge.

### SUMMARY OF THE INVENTION

However, conventional art described above has a problem that a service charge corresponding to actual labor cannot be collected. For example, even in a case where the same amount of money is handled by a money handling apparatus, if greatly damaged money or stained money is mixed, effort and time may increase for handling the money. In conventional art, a service charge cannot be calculated based on the increasing of labor.

The present invention is made in order to solve the aforementioned problem of conventional art, and an object of the present invention is to provide a service charge calculation system, a money handling apparatus, and a service charge calculation method that can calculate a service charge corresponding to labor.

In order to solve the aforementioned problem and achieve the object, the present invention is directed to a service charge calculation system that includes: a money handling unit configured to perform money handling for counting money; a time calculation unit configured to calculate a time for the money handling performed by the money handling unit; and a service charge calculation unit configured to calculate a service charge on the basis of the time calculated by the time calculation unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram for explaining a method of calculating a service charge by using a money handling apparatus;
FIG. 2 is a schematic cross-sectional view of an internal structure of a banknote handling apparatus;
FIG. 3 is a block diagram illustrating a functional structure of the banknote handling apparatus;
FIG. 4 illustrates an example of banknote handling data stored in a memory unit;
FIGS. 5A to 5C are diagrams for explaining a method of calculating a service charge;
FIG. 6 illustrates an example of service charge data stored in the memory unit;
FIGS. 7A and 7B illustrate another example of calculation of a service charge;
FIG. 8 is a schematic diagram for explaining a method of predicting a time required for banknote handling; and
FIG. 9 is a block diagram illustrating a structure of a service charge calculation system according to embodiment 2.

### DESCRIPTION OF THE PREFERRED EMBODIMENTS

A service charge calculation system, a money handling apparatus, and a service charge calculation method according to the present invention will be described below in detail with reference to the accompanying drawings. The service charge calculation system, the money handling apparatus, and the service charge calculation method can handle both coins and banknotes. Coins and banknotes are handled in a similar manner. Therefore, in the present embodiment, an example of handling of banknotes will be described. In embodiment 1, a mode in which a banknote handling apparatus (money handling apparatus) calculates a service charge, will be described. In embodiment 2, a mode in which an operation terminal connected to the banknote handling apparatus calculates a service charge, will be described.

### [Embodiment 1]

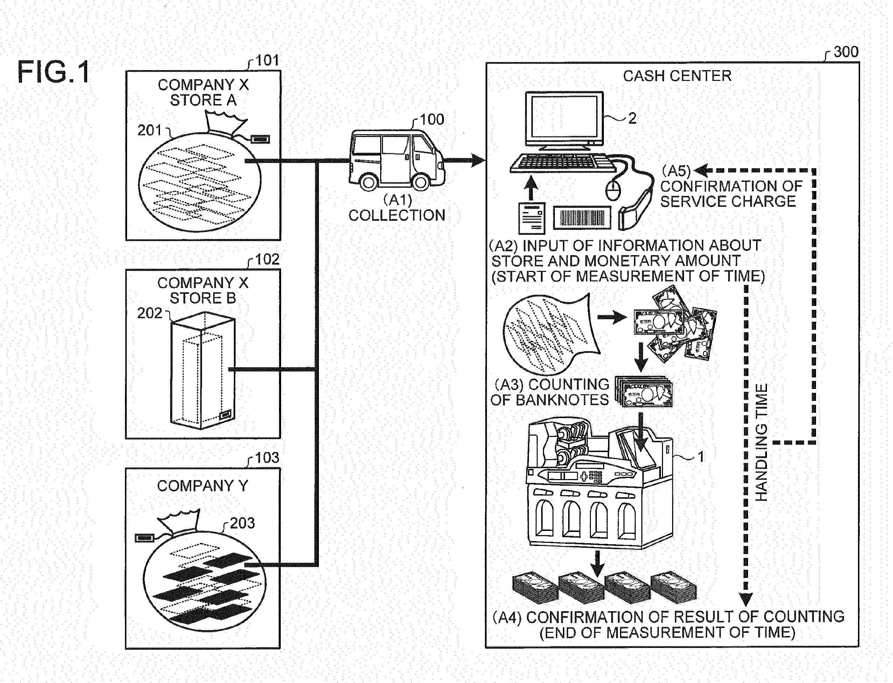

FIG. 1 is a schematic diagram for explaining a method of calculating a service charge by using a banknote handling apparatus 1. A cash in transit (CIT) company collets sales proceeds stored in storage containers 201 to 203, from a plurality of stores 101 to 103 which are customers, and transfers the collected sales proceeds to a cash center 300 by an armored car 100 (A1). For example, as shown in FIG. 1, banknotes in the bag 201 are collected from Store A (hereinafter, referred to as "store 101") of Company X. Banknotes in the banknote cassette 202 are collected from Store B (hereinafter, referred to as "store 102") of Company X. The banknote cassette 202 is a cassette-type banknote storage/feeding unit which is detachably mounted to a money handling apparatus used in Store B (102). In the banknote cassette 202, banknotes are aligned and stored in a stacked state. Banknotes in the bag 203 are collected from the store 103 of Company Y.

In the cash center 300, whether or not a monetary amount of banknotes stored in each of the storage containers 201 to 203 matches with a monetary amount of sales proceeds reported by the respective stores 101 to 103, is confirmed. This confirmation is performed by using the banknote handling apparatus 1 and an operation terminal 2 connected to the banknote handling apparatus 1. The service charge calculation system is structured by the banknote handling apparatus 1 and the operation terminal 2.

Handling performed in the cash center 300 will be described by using an example of handling of sales proceeds collected from the store 101. Firstly, a staff member who is in charge of handling in the cash center 300 operates the operation terminal 2 to input store information (customer information) representing the store 101 from which the sales proceeds have been collected, and a monetary amount of the sales proceeds collected from the store 101 (A2). When an input operation for the sales proceeds has been performed, the banknote handling apparatus 1 starts measuring a banknote handling time.

For example, store information for identifying the store 101, and a monetary amount of the sales proceeds are written on a sales slip collected from the store 101 together with the bag 201 in which the sales proceeds are stored. The staff member in charge operates a keyboard of the operation terminal 2, to input the store information and the monetary amount of the sales proceeds. Furthermore, for example, in a case where a barcode of a tag attached to the bag 201 includes information about the store and the monetary amount of the sales proceeds, the store information and the monetary amount of the sales proceeds are read by using a barcode reader connected to the operation terminal 2, and are inputted to the operation terminal 2.

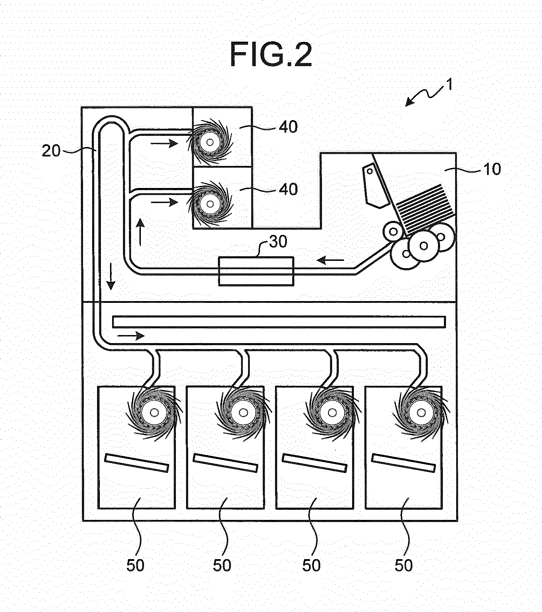

Subsequently, the staff member in charge takes out the banknotes from the bag 201, and operates the banknote handling apparatus 1 to recognize/count the banknotes (A3). For example, when the banknotes are placed in a reception inlet 10 (see FIG. 2) of the banknote handling apparatus 1, recognition/counting of the banknotes in the reception inlet 10 is automatically started. The staff member in charge sequentially places the banknotes taken out from the bag 201, in the reception inlet 10, to continue recognition/counting of the banknotes. When all the banknotes stored in the bag 201 have been recognized/counted, the staff member in charge performs a predetermined operation on the banknote handling apparatus 1 or the operation terminal 2, to end the recognition/counting operation. When the recognition/counting operation has been ended, a result of recognition/counting such as the total monetary amount is displayed on a screen of the operation terminal 2. After the staff member in charge confirms that the monetary amount, of the sales proceeds, which has been inputted to the operation terminal 2 in advance, and the total monetary amount of the banknotes counted by the banknote handling apparatus 1 match with each other, the staff member performs an operation of confirming the result of the counting, on the operation terminal 2 (A4).

When the staff member in charge has performed the operation for the confirmation, the banknote handling apparatus 1 ends measurement of the banknote handling time. The banknote handling apparatus 1 calculates a service charge on the basis of the measured handling time. The calculated service charge can be confirmed on the screen of the operation terminal 2 connected to the banknote handling apparatus 1 (A5).

Thus, the banknote handling apparatus 1 has a function of detecting a predetermined operation or a predetermined process, and measuring a time that has been required for handling banknotes. The banknote handling apparatus 1 calculates a service charge on the basis of the measured handling time. For example, a calculation expression for calculating a service charge is preset, and the banknote handling apparatus 1 calculates the service charge by substituting the measured handling time into the calculation expression. Furthermore, for example, a rate table, in which correspondence between handling times and service charges is set, is prepared in advance, and the banknote handling apparatus 1 calculates the service charge with reference to the rate table on the basis of the handling time.

Even when the same number of banknotes are handled, a handling time for banknotes may vary depending on cases. For example, banknotes are randomly stored in the bag 201. Therefore, as shown in FIG. 1, the staff member in charge needs to stack the banknotes taken out from the bag 201, in an aligned state, and to then place the banknotes in the reception inlet 10 of the banknote handling apparatus 1. Meanwhile, banknotes in the banknote cassette 202 are stored in an aligned and stacked state. Therefore, the staff member in charge is allowed to place the banknotes taken out from the banknote cassette 202, in the reception inlet 10 of the banknote handling apparatus 1, as they are. Even when the number of the banknotes stored in the bag 201 and the number of the banknotes stored in the banknote cassette 202 are the same, the time required for handling the banknotes in the bag 201 is longer than the time required for handling the banknotes in the banknote cassette 202 due to labor for arranging the banknotes being required.

The banknote handling apparatus 1 has a function of calculating a service charge on the basis of a time required for banknote handling. The greater the number of banknotes to be handled is and the longer the time for the handling is, the higher the service charge is. Furthermore, in a case where, although the same number of the banknotes are handled in the banknote handling, labor for the handling increases and the handling time thus becomes long, the service charge becomes high. Therefore, when the time required for handling banknotes in the bag 201 becomes longer as compared to a case where banknotes in the banknote cassette 202 are handled, the calculated service charge for the bag 201 becomes high, and the service charge corresponding to the labor can be collected.

Even when the same number of banknotes are handled and the same type of banknote storage containers are used, a handling time for banknotes may vary depending on cases. For example, in a case where the bag 201 of the store 101 and the bag 203 of the store 103 as shown in FIG. 1 are of the same type, and the number of banknotes in the bag 201 and the number of banknotes in the bag 203 are the same, a time for operation of placing the banknotes taken out from the bag 201, in the reception inlet 10, and a time for operation of placing the banknotes taken out from the bag 203, in the reception inlet 10, are almost the same in general. Furthermore, times for recognition/counting of the banknotes by the banknote handling apparatus 1 are almost the same. However, in a case where the banknotes in the bag 201 are in a good flat condition whereas the banknotes in the bag 203 are greatly damaged or stained, a time required for placing the banknotes taken out from the bag 203, in the reception inlet 10, in a stacked and aligned state is increased as compared to a time required for the operation for the banknotes taken out from the bag 201.

Furthermore, when the banknotes are damaged or stained, a time required for recognition/counting by the banknote handling apparatus 1 also becomes long. The banknote handling apparatus 1 recognizes, for example, denominations of banknotes on the basis of the features of the banknotes read inside the apparatus, and counts the number of the banknotes and a monetary amount of the banknotes. At this time, a banknote, which is too greatly damaged or stained to recognize the denomination or the like, is rejected to the outside of the apparatus. When the banknote is rejected, the staff member in charge needs to unwrinkle the rejected banknote and insert the banknote in the apparatus again, or needs to manually input, to the operation terminal 2, the denomination or the like of the banknote which cannot be recognized by the banknote handling apparatus 1. Therefore, in a case where a banknote is rejected, a time until end of recognition/counting of all the banknotes becomes long. Also in such a case, the banknote handling apparatus 1 calculates a service charge corresponding to a banknote handling time, to allow a service charge corresponding to the labor to be collected.

Thus, the service charge calculation system that includes the banknote handling apparatus 1 detects a predetermined operation or a predetermined process representing the start of banknote handling, and a predetermined operation or a predetermined process representing the end of the banknote handling, and measures a time from the start of the handling to the end of the handling. The service charge calculation system calculates the service charge on the basis of the measured time, and service charge calculation setting, such as a calculation expression and a rate table, having been prepared in advance. In a case where, although the same number of banknotes are handled, a time for handling increases, the service charge corresponding to the time is calculated. Thus, the cash center allows collection, of a service charge corresponding to labor for collecting sales proceeds, from a customer such as Company X or Y from which a request for collecting the sales proceeds is received.

Next, a structure of the banknote handling apparatus 1 will be described. FIG. 2 is a schematic cross-sectional view of an internal structure of the banknote handling apparatus 1. A banknote handling unit (money handling unit) that handles actual banknotes in the service charge calculation system is structured by the components shown in FIG. 2. When a plurality of banknotes to be recognized/counted are placed in the reception inlet 10 in a stacked state, a sensor provided in the reception inlet 10 detects the placed banknotes, the banknote handling is started, and the banknotes in the reception inlet 10 are fed one by one into the apparatus. A transport unit 20 transports the banknotes having been fed into the apparatus, along a transport path. In the transport path, a recognition unit 30 is provided. The recognition unit 30 performs, for example, recognition of a denomination, authentication, and recognition of fitness/unfitness, for the banknote transported by the transport unit 20. The transport unit 20 transports each banknote to a stacking unit 50 or a reject unit 40 on the basis of the result of recognition by the recognition unit 30. Denominations for banknotes to be stacked in the stacking units 50 may be preset. For example, banknotes which have been recognized as being genuine by the recognition unit 30 are stacked in the stacking units 50 for each denomination by denomination. Banknotes which cannot be recognized by the recognition unit 30, banknotes recognized as being counterfeit, banknotes recognized as suspect notes, and the like are stacked as rejected notes in the reject unit 40.

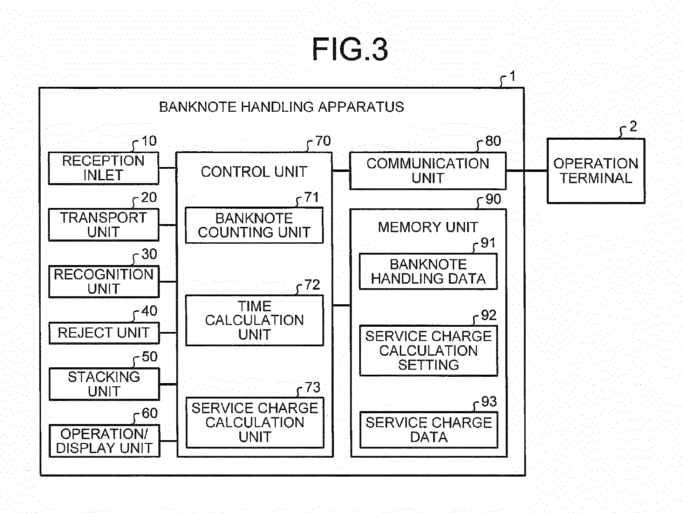

FIG. 3 is a block diagram illustrating a functional structure of the banknote handling apparatus 1. The banknote handling apparatus 1 includes an operation/display unit 60, a control unit 70, a communication unit 80, and a memory unit 90, in addition to the components shown in FIG. 2.

The operation/display unit 60 includes, for example, a touch-panel-type liquid crystal display, and the like. The operation/display unit 60 functions as an input unit that allows input of various kinds of information for instructions and setting, and also functions as a display unit for displaying various kinds of information.

A staff member in charge of banknote handling is allowed to perform, for example, an instruction operation for starting the banknote handling, an instruction operation for ending recognition/counting of banknotes, and an instruction operation for confirming a result of the recognition/counting and ending the banknote handling, by using the operation/display unit 60. These instruction operations may be performed also by using the operation terminal 2.

The communication unit 80 has a function of communicating with an external device. The operation terminal 2 can be connected to the banknote handling apparatus 1 by using the communication unit 80 as shown in FIG. 3. The operation terminal 2 is a computer device that includes an operation unit, such as a keyboard, a mouse, or a barcode reader, for inputting information, and a display unit, such as a liquid crystal display, for outputting information.

When a cash in transit (CIT) company collects sales proceeds from each of the stores 101 to 103, the CIT company collects both sales slips for the sales proceeds and the storage containers 201 to 203 for the sales proceeds. The contents in the sales slip for the sales proceeds include a monetary amount of the sales proceeds, and store information such as a name of a store. A staff member, of the cash center, in charge confirms the sales slip when starting the handling of the sales proceeds. For example, the staff member in charge operates the keyboard of the operation terminal 2 to input the monetary amount of the sales proceeds and the store information. Alternatively, for example, the staff member in charge operates the mouse of the operation terminal 2, and selects the store from the customer information displayed as a list on the screen, to input the store information. In a case where a tag, on which a barcode generated by coding a monetary amount of the sales proceeds and the store information is printed, is attached to each storage container 201 to 203, or in a case where the barcode is printed on the sales slip, the monetary amount of the sales proceeds and the store information may be inputted by the barcode being read by the barcode reader of the operation terminal 2.

The operation terminal 2 is used also for inputting ID information (identification information) assigned to each staff member in charge of banknote handling. Information of a staff member in charge of the banknote handling can be recorded by inputting the ID information of the staff member in charge, when banknote handling is performed. The ID information may be manually inputted by operating the keyboard, or may be inputted by the barcode reader reading a barcode representing the ID information.

The memory unit 90 is a non-volatile storage device that includes a semiconductor memory and the like. As shown in FIG. 3, in the memory unit 90, banknote handling data 91, service charge calculation setting 92, and service charge data 93 are stored. The banknote handling data 91 represents data in which information about banknote handling performed by the banknote handling apparatus 1 is stored. The service charge calculation setting 92 represents data in which setting for calculating a service charge is stored. The service charge data 93 represents data in which information about a service charge calculated by the banknote handling apparatus 1 is stored. In addition thereto, the memory unit 90 is also used to store various programs and temporary data.

The control unit 70 controls each component by using the program and the data stored in the memory unit 90, and allows the functions and operations according to the present embodiment to be implemented. The control unit 70 includes a banknote counting unit 71, a time calculation unit 72, and a service charge calculation unit 73.

The banknote counting unit 71 counts the number and a monetary amount of banknotes for each denomination and the number and a monetary amount of all the banknotes, on the basis of a result of recognition by the recognition unit 30. The information representing the number and the monetary amount of the banknotes counted by the banknote counting unit 71, and the like, is stored in the banknote handling data 91 in the memory unit 90.

The time calculation unit 72 detects a predetermined operation or a predetermined process which has been preset, and calculates a time that has been required for banknote handling. In a case where an operation or a process which represents a start time for banknote handling, and an operation or a process which represents an end time for the banknote handling are preset, the time calculation unit 72 detects the start time and the end time for the banknote handling on the basis of the setting, and calculates a time that has been required for the banknote handling.

For example, in the banknote handling for counting sales proceeds by using the banknote handling apparatus 1, input of a monetary amount of the sales proceeds, recognition/counting of banknotes of the sales proceeds, matching between the inputted monetary amount of the sales proceeds and a result of counting of the banknotes, and confirmation of a result of the matching are performed in order, respectively. In a case where input of a monetary amount of sales proceeds is set as a start time for banknote handling, the time calculation unit 72 sets a time when the monetary amount of the sales proceeds has been inputted by using the operation/display unit 60 of the banknote handling apparatus 1, or the operation terminal 2, as a starting time when the banknote handling is started. Furthermore, in a case where a confirmation operation performed after confirming matching between a result of counting of banknotes and a monetary amount of sales proceeds is set as an end time for banknote handling, the time calculation unit 72 sets a time when the confirmation operation is performed by using the operation/display unit 60 or the operation terminal 2, as an ending time when the banknote handling is ended. The time calculation unit 72 calculates a time that has been required for the handling, on the basis of the handling start time and the handling end time. The time calculated by the time calculation unit 72 is stored in the banknote handling data 91 in the memory unit 90. The method for calculating the time is not limited to a method based on a clock time, and may be a method in which a time is measured by counting a time period from the start time to the end time.

The service charge calculation unit 73 calculates a service charge on the basis of: the banknote handling data 91 including information of the banknote handling time calculated by the time calculation unit 72; and the service charge calculation setting 92 that has been prepared in advance. Processing for calculating the service charge will be specifically described below.

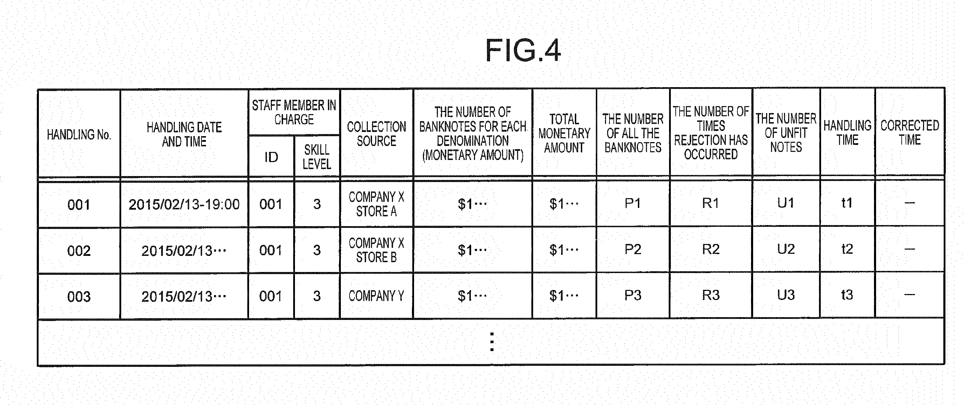

FIG. 4 illustrates an example of the banknote handling data 91 stored in the memory unit 90. In the banknote handling data 91, information of a result of recognition/counting of banknotes, a banknote handling time, and the like is stored each time banknote handling is performed. An item of "handling No." shown in FIG. 4 represents an identification number for identifying each banknote handling. The information of handling No. 1 corresponds to banknote handling for the bag 201 collected from the store 101 shown in FIG. 1. The information of handling No. 2 corresponds to banknote handling for the banknote cassette 202 collected from the store 102. The information of handling No. 3 corresponds to banknote handling for the bag 203 collected from the store 103.

The item of "handling date and time" shown in FIG. 4 represents a date and time when banknote handling is started. The item of "ID" of the item "staff member in charge" represents ID information of a staff member in charge of the banknote handling, and the item of "skill level" represents a skill level, for the banknote handling, of the staff member in charge.

The skill level is classified into, for example, three levels of 1 to 3 such that "1" represents a beginner and "3" represents a skilled staff member. The staff member information, in which ID information of the staff members in charge and skill levels of the staff members are associated with each other, is managed in the service charge calculation setting 92 in the memory unit 90. When the ID information of a staff member in charge is inputted to the banknote handling apparatus 1, the skill level of the staff member in charge is stored in the banknote handling data 91 on the basis of the staff member information. The staff member information is administered by a managing staff member who administers the staff members. The managing staff member updates the skill level of the staff member according to experience and ability of the staff member. The managing staff member is allowed to operate the operation terminal 2 to confirm information, about, for example, the number of times each staff member performed the banknote handling in the past, the contents of the handling, and banknote handling times, which are stored in the banknote handling data 91. For example, when the banknote handling data 91 is read onto the screen of the operation terminal 2, and a collection source of the sales proceeds is selected, the time calculation unit 72 extracts: staff members who handled sales proceeds from the collection source; and the banknote handling times, from the data stored in the banknote handling data 91. The time calculation unit 72 calculates an average value of the banknote handling times for each staff member. The managing staff member is allowed to confirm the average value of the banknote handling times of each staff member and update the skill level in the staff member information, on the screen of the operation terminal 2.

The banknote handling apparatus 1 calculates a service charge for banknote handling on the basis of a time that has been required for the banknote handling. A time required for recognition/counting in which banknotes placed in the reception inlet 10 are taken one by one into the apparatus, are transported, are recognized/counted by the recognition unit 30, and are stacked in the reject unit 40 or the stacking unit 50 is almost the same regardless of the skill level of the staff member in charge. Meanwhile, for example, a time required for inputting a monetary amount of sales proceeds and the store information before the banknote handling apparatus 1 starts counting banknotes, and a time required for placing banknotes taken out from a storage container such as a bag, in the reception inlet 10, in an aligned state, vary depending on the skill level. In the case of a beginner who is not experienced in an operation of the banknote handling apparatus 1 and the operation terminal 2, and in banknote handling, an operation time becomes longer than an operation time of the operation performed by a skilled staff member. Therefore, the banknote handling apparatus 1 stores the skill level of a staff member in charge, who has performed the banknote handling, in the banknote handling data 91. The banknote handling apparatus 1 can be set so as to correct the banknote handling time as necessary.

In a case it is set to correct the time, after the banknote handling has been ended, the time calculation unit 72 confirms the skill level, of the staff member in charge, which has been stored in the banknote handling data 91. For example, in a case where a staff member having the skill level of "1" has performed the banknote handling, the time calculation unit 72 corrects an operation time included in the calculated banknote handling time. Specifically, the time calculation unit 72 calculates the operation time by subtracting the recognition/counting time that has been required for feeding all the banknotes placed in the reception inlet 10 into the apparatus and stacking in the reject unit 40 or the stacking unit 50, from the banknote handling time that is the time from input of a monetary amount of the sales proceeds to confirmation of a result of counting of the banknotes. The recognition/counting time required for recognizing/counting all the banknotes placed in the reception inlet 10, and stacking the banknotes in the reject unit 40 or the stacking unit 50 is referred to as a machine handling time during which the banknote handling apparatus 1 performs handling. The remaining time obtained by subtracting the machine handling time from the banknote handling time is referred to as an operation time during which the staff member in charge performs operation. The time calculation unit 72 performs time correction by multiplying the calculated operation time by a correction coefficient corresponding to the skill level of the staff member in charge. The correspondence between the skill levels and the correction coefficients is managed in the service charge calculation setting 92 in the memory unit 90. The time calculation unit 72 calculates a corrected banknote handling time by summing the corrected operation time and the machine handling time. The corrected banknote handling time is stored in the banknote handling data 91. The item of "corrected time" shown in FIG. 4 represents the corrected time.

For example, in a case where a time from input of a monetary amount of sales proceeds to confirmation of a result of counting of banknotes is 10 minutes, and the machine handling time that has been required for recognizing/counting and stacking of all the banknotes by the banknote handling apparatus 1 is 6 minutes, the time calculation unit 72 calculates the operation time by the staff member in charge as 4 minutes. In a case where the skill level of the staff member in charge is "1" and the correction coefficient corresponding to the skill level of "1" is set as 0.7, the time calculation unit 72 multiplies 4 minutes of the operation time by 0.7 of the correction coefficient, to correct the operation time to 2.8 minutes. 2.8 minutes of the corrected operation time is added to 6 minutes of the machine handling time, to obtain 8.8 minutes as the banknote handling time. Thus, the time calculation unit 72, which has corrected the banknote handling time from 10 minutes to 8.8 minutes, stores the corrected banknote handling time in the banknote handling data 91. Also in a case where a skill level of a staff member who has performed the banknote handling is "2", time correction is similarly performed by using a correction coefficient corresponding to the skill level. However, the method for correcting the banknote handling time is not limited to the method for correcting the operation time, and may be a method for correcting the entirety of the banknote handling time including the machine handling time and the operation time.

The item of "collection source" in the banknote handling data 91 shown in FIG. 4 is information representing a customer from which sales proceeds have been collected and a store of the customer. The item of "the number (monetary amount) of banknotes for each denomination" represents the number (monetary amount) of banknotes, for each denomination, which has been obtained by recognizing/counting the banknotes of sales proceeds by the banknote handling apparatus 1. The item of the "total monetary amount" represents a total monetary amount of sales proceeds obtained by recognizing/counting banknotes of the sales proceeds.

The item of "the number of all the banknotes" represents the number of banknotes of the sales proceeds. "The number of times rejection has occurred" represents the number of times a banknote is rejected into the reject unit 40 until end of the banknote handling. The rejected banknotes include banknotes for which abnormal transporting, such as chaining in which some of a plurality of banknotes overlap each other, and overlapping in which the entirety of the banknotes overlap each other, has been detected, in some cases. In a case where chaining or overlapping is detected, it is difficult to determine the number of rejected banknotes. Therefore, the number of times rejection has occurred is used as the item. The number of times rejection has occurred becomes equal to the number of rejected banknotes when no chaining or overlapping occurs.

The item of "the number of unfit notes" represents the number of unfit notes included in sales proceeds. The unfit note is a banknote that is determined to be greatly damaged or stained, on the basis of a predetermined criterion. The item of "handling time" represents a banknote handling time calculated by the time calculation unit 72. That is, the handling time represents a time period from a time when a monetary amount of sales proceeds is inputted by using the banknote handling apparatus 1 or the operation terminal 2, to a time when it is determined and confirmed that the inputted monetary amount matches with the total monetary amount of the banknotes recognized/counted by the banknote handling apparatus 1. In the item of "corrected time", a corrected time is stored when the time calculation unit 72 has performed time correction as described above.

Each time the banknote handling apparatus 1 performs banknote handling, data concerning the banknote handling is stored as shown in FIG. 4. Thus, not only a service charge can be calculated for each banknote handling but also a service charge can be calculated on the basis of banknote handling performed in a predetermined time period such as one week or one month. Furthermore, a service charge can be calculated for each store of a customer from which sales proceeds are collected. For example, a service charge for Store A of Company X and a service charge for Store B of Company X can be each calculated. Furthermore, a service charge can be calculated for each customer (for each company). For example, a service charge for Company X and a service charge for Company Y can be each calculated.

The service charge calculation unit 73 calculates a service charge on the basis of the banknote handling data 91 and the service charge calculation setting 92 which are stored in the memory unit 90. In the cash center, the banknote handling for sales proceeds is performed and the banknote handling data 91 is stored as shown in FIG. 4. In this state, the service charge calculation unit 73 calculates the service charge.

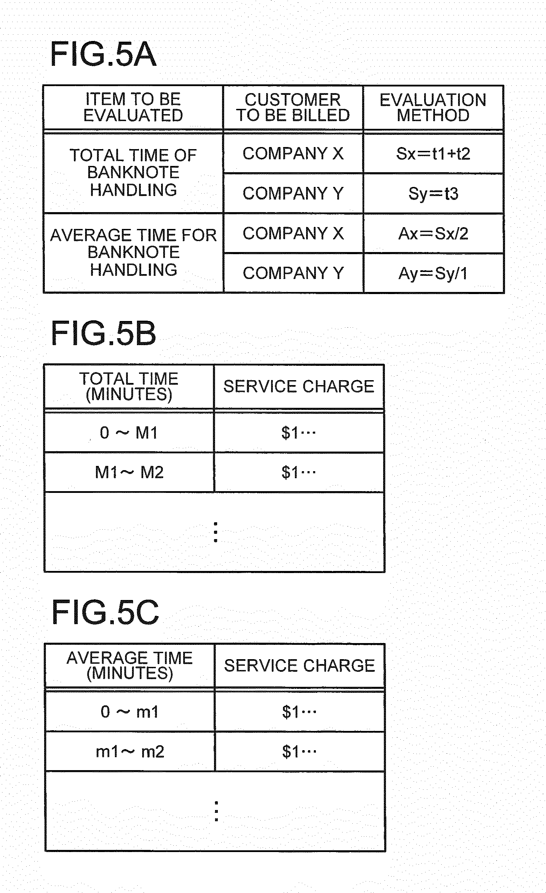

FIGS. 5A to 5C are diagrams for explaining a method of calculating a service charge. FIG. 5A illustrates a method for calculating a service charge on the basis of a handling time of banknote handling. FIG. 5B illustrates a rate table used for calculating a service charge on the basis of the calculated total time of the banknote handling. FIG. 5C illustrates a rate table used for calculating a service charge on the basis of the calculated average time for the banknote handling. A plurality of rate tables are stored in the service charge calculation setting 92, and each rate table is managed by assigning an identification number for identifying the rate table.

In a case where Company X and Company Y are each billed for a service charge when the service charge is set to be calculated on the basis of the total time of banknote handling performed in one collection of sales proceeds, the service charge calculation unit 73 calculates the total times Sx, Sy of the banknote handling as indicated in "the total time of banknote handling" on the upper side in FIG. 5A with reference to the banknote handling data 91 shown in FIG. 4. The total time Sx of banknote handling in which sales proceeds of Company X have been handled, is a total value of a banknote handling time t1 for sales proceeds collected from Store A (101), and a banknote handling time t2 for sales proceeds collected from Store B (102). The total time Sy that has been required for handling sales proceeds of Company Y is a banknote handling time t3 for the sales proceeds collected from the store 103. The service charge calculation unit 73 calculates the service charges for Company X and Company Y, on the basis of the calculated total times Sx, Sy, with reference to the rate table shown in FIG. 5B.

In a case where Company X and Company Y are each billed for a service charge when the service charge is set to be calculated on the basis of an average time for banknote handling performed in one collection of sales proceeds, the service charge calculation unit 73 calculates average times Ax, Ay as indicated in "average time for banknote handling" on the lower side in FIG. 5A with reference to the banknote handling data 91 shown in FIG. 4. The average time Ax that has been required for handling sales proceeds for Company X is obtained by dividing the total time Sx of the banknote handling by two that is the number of times of the banknote handling. The average time Ay that has been required for handling sales proceeds for Company Y is obtained by dividing the total time Sy of the banknote handling by one that is the number of times of the banknote handling. The service charge calculation unit 73 refers to the rate table shown in FIG. 5C on the basis of the calculated average times Ax, Ay. The service charge calculation unit 73, which has obtained a service charge for one banknote handling from the rate table on the basis of the average time, multiplies the service charge by the number of times of the banknote handling, to calculate the service charge. Specifically, for example, in a case where, as a result of referring to the service charge table, the service charge, for one banknote handling, corresponding to the average time Ax for Company X is indicated as one dollar, since banknote handling has been performed twice in order to handle the sales proceeds for Company X, two dollars (= one dollar/one time x 2 times) is calculated as the service charge.

As shown in FIG. 4, the banknote handling for the sales proceeds of each of Company X and Company Y is performed by a staff member having the skill level of "3", and a corrected time is not recorded. Therefore, the total times and the average times are calculated on the basis of the handling times t1 to t3 shown in FIG. 4. Meanwhile, in a case where a corrected time calculated by correction based on the skill level of the staff member in charge is recorded, the total time and the average time are calculated on the basis of the corrected time. Thus, the service charge can be calculated as a charge that is less influenced by the skill level of the staff member in charge.

However, the correction method based on the skill level of the staff member in charge may be not only a method for calculating a service charge after a banknote handling time has been corrected, but also a method for calculating a service charge without correcting the banknote handling time and thereafter correcting the service charge. In this case, for example, a charge correction table, in which correction coefficients for correcting service charges according to the skill levels of the staff members in charge is set, is prepared in advance. The total times or the average times are calculated on the basis of the handling times t1 to t3, and service charges are calculated on the basis of the total times or the average times, and the service charges are thereafter corrected by using the correction coefficients corresponding to the skill levels of the staff members in charge.

An example where a service charge is calculated for banknote handling performed in one collection of sales proceeds has been described. In a case where collection of sales proceeds is performed once a day, the service charge which is thus calculated corresponds to a service charge for one day.

A method for calculating the service charge is not limited to a method for calculating the service charge on the basis of one banknote handling or banknote handling for one day. For example, the service charge may be calculated by setting a predetermined time period such as one week or one month. In this case, at a time when the predetermined time period has elapsed, the service charge calculation unit 73 calculates the total time or the average time by using information, for the banknote handling, which has been stored in the banknote handling data 91 during the predetermined time period, and calculates the service charge with reference to a rate table that is prepared in advance so as to correspond to the calculation method.

Furthermore, the calculation method is not limited to a method for calculating all the service charges on the basis of one of the total time or the average time. For example, the service charges may be set to be calculated in methods which are different for each company. For example, the service charge for Company X may be calculated on the basis of the total time and the service charge for Company Y may be calculated on the basis of the average time. When the service charge for Company X is calculated, the service charges may be calculated in methods different between Store A and Store B. In this case, the service charge for Company X is obtained by summing the service charge for Store A and the service charge for Store B.

Furthermore, for example, the service charge may be set to be calculated on the basis of a handling time per one banknote, in other words, on the basis of the number of banknotes which have been handled per unit time. In this case, as shown in FIG. 4, each number P1 to P3, of all the banknotes, stored in the banknote handling data 91 is used. Specifically, the average time that has been required for handling one banknote is calculated on the basis of each handling time t1 to t3 or the corrected time, and each number P1 to P3 of all the banknotes. With reference to a rate table in which a charge for one banknote is preset so as to correspond thereto, the charge obtained from the rate table is multiplied by each number P1 to P3 of banknotes, to calculate the service charge. For example, in a case where 100 banknotes have been handled, when a charge set in the rate table so as to correspond to a handling time for one banknote is 0.01 dollars, one dollar (= 0.01 dollar x 100 banknotes) is calculated as the service charge.

Furthermore, an example where the service charge for Company X and the service charge for Company Y are calculated by using the same rate table has been described. However, setting may be such that the rate table for Company X and the rate table for Company Y are separately prepared, and the rate tables are used for Company X and Company Y, respectively. Furthermore, also for Company X, the service charge for Store A and the service charge for Store B may be set to be calculated by using separate rate tables, respectively.

Furthermore, a method for calculating the service charge is not limited to a method for calculating the service charge by using the rate table in which correspondence between a plurality of time widths and service charges is set, as shown in FIGS. 5B and 5C. For example, a reference service charge, a reference handling time, and a rate table representing correspondence between: time widths of excess times that exceed the reference handling time; and magnifications, may be set to calculate the service charge. Specifically, for example, the reference handling time is set as 10 minutes and the reference service charge is set as one dollar, and the time width and the magnification are set in the rate table such that, when the excess time that exceeds the reference handling time is 0 to 5 minutes, the service change is multiplied by 1.1. In this case, for example, when the banknote handling time is 12 minutes, the service charge is calculated as 1.1 dollars by the reference service charge of 1 dollar being multiplied by 1.1.

Furthermore, for example, a reference service charge, a reference handling time, and a rate table representing correspondence between: time widths of excess times that exceed the reference handling time; and additional service charges may be set to calculate the service charge. Specifically, for example, the reference handling time is set as 10 minutes and the reference service charge is set as 1 dollar, and the time width and the additional service charge are set in the rate table such that, when the excess time that exceeds the reference handling time is 0 to 5 minutes, the additional service charge is 0.1 dollars. In this case, for example, when the banknote handling time is 12 minutes, the service charge is calculated as 1.1 dollars by adding the additional service charge of 0.1 dollars to the reference service charge of 1 dollar.

Furthermore, the rate table is not limited to the rate table in which correspondence between a plurality of time widths and the service charges is set. For example, correspondence between a plurality of time widths and calculation expressions for a service charge may be set. In this case, the total time of banknote handling or the average time for banknote handling is substituted into the calculation expression for a service charge, to calculate the service charge.

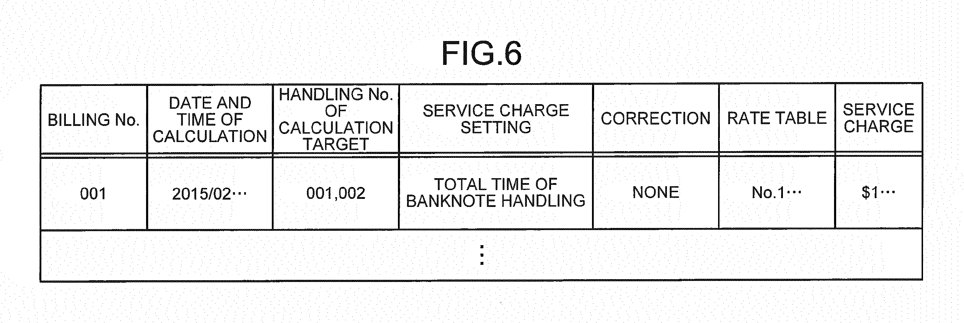

The service charge calculation unit 73, which has thus calculated the service charge, stores the calculated service charge and information about the service charge, in the service charge data 93 in the memory unit 90. FIG. 6 illustrates an example of the service charge data 93 stored in the memory unit 90. The item of "billing No." represents an identification number for identifying each service charge having been calculated. The item of "date and time of calculation" represents a date and time when the service charge has been calculated. In a case where the service charge is calculated for banknote handling performed during a predetermined time period, the information representing the predetermined time period is stored as the date and time of calculation. The item of "service charge setting" represents setting used for calculating the service charge. The item of "correction" represents information about correction in calculation of the service charge. In a case where the time calculation unit 72 performs time correction according to the skill level of a staff member in charge as described above, information representing both a time before the time correction and a time after the time correction, is stored. Meanwhile, in a case where the service charge calculation unit 73 has corrected the service charge, information representing the service charge which has not yet been corrected is stored. The item of "rate table" represents an identification number of a rate table used for calculating the service charge. The item of "service charge" represents the calculated service charge. Thus, banknote handling for which the service charge has been calculated, setting used for calculating the service charge, the rate table, and the information about the contents of the correction and the like are stored, whereby verification can be easily performed when a trouble occurs later.

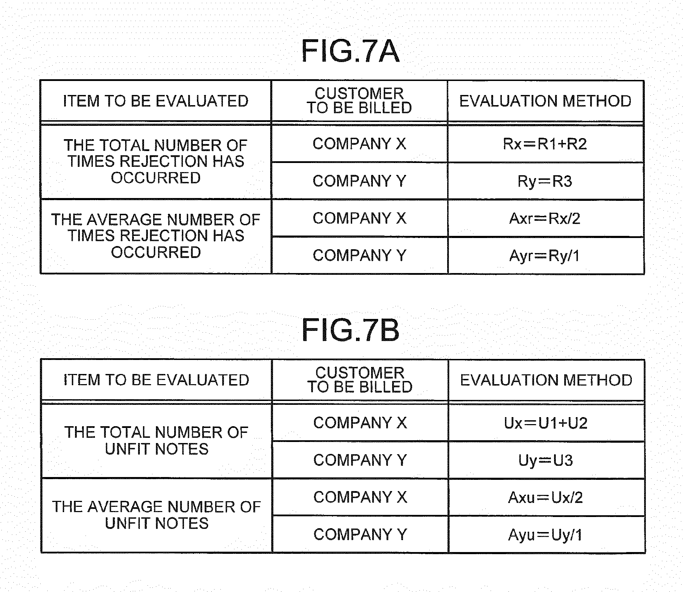

The banknote handling apparatus 1 can be set so as to calculate the service charge on the basis of information other than the banknote handling time. FIGS. 7A and 7B illustrate another example of setting for calculating a service charge. FIG. 7A illustrates an example of calculating a service charge on the basis of the total number of times rejection has occurred, or the average number of times rejection has occurred. FIG. 7B illustrates an example of calculating a service charge on the basis of the total number of unfit notes or the average number of unfit notes. As shown in FIG. 4, each number of times R1 to R3 rejection has occurred and each number U1 to U3 of unfit notes in each banknote handling are stored in the banknote handling data 91.

In a case where Company X and Company Y are each billed for a service charge when the service charge is set to be calculated on the basis of the total number of times rejection has occurred in banknote handling performed in one collection of sales proceeds, the service charge calculation unit 73 calculates the total number of times Rx, Ry rejection has occurred as indicated in "the total number of times rejection has occurred" on the upper side in FIG. 7A with reference to the banknote handling data 91 shown in FIG. 4. The total number of times Rx rejection has occurred in handling of sales proceeds for Company X is a total value of the number of times R1 rejection has occurred in handling of sales proceeds collected from Store A (101), and the number of times R2 rejection has occurred in handling of sales proceeds collected from Store B (102). The total number of times Ry rejection has occurred in handling of sales proceeds for Company Y is the number of times R3 rejection has occurred in handling of sales proceeds collected from the store 103. The service charge calculation unit 73 calculates the service charge for Company X and the service charge for Company Y on the basis of the calculated total number of times Rx, Ry rejection has occurred, with reference to a dedicated rate table which has been prepared in advance.

In a case where Company X and Company Y are each billed for a service charge when the service charge is set to be calculated on the basis of the average number of times rejection has occurred in banknote handling performed in one collection of sales proceeds, the service charge calculation unit 73 calculates the average number of times Axr, Ayr rejection has occurred as indicated in "the average number of times rejection has occurred" on the lower side in FIG. 7A with reference to the banknote handling data 91 shown in FIG. 4. The average number of times Axr rejection has occurred in handling of sales proceeds for Company X is obtained by the total number of times Rx rejection has occurred being divided by two that is the number of times of banknote handling. The average number of times Ayr rejection has occurred in handling of sales proceeds for Company Y is obtained by the total number of times Ry rejection has occurred being divided by one that is the number of times of banknote handling. The service charge calculation unit 73 calculates the service charge for Company X and the service charge for Company Y, on the basis of the calculated average number of times Axr, Ayr rejection has occurred, with reference to a dedicated rate table which has been prepared in advance.

In a case where the service charge is calculated on the basis of the number of times rejection has occurred, for example, a reference charge is set according to the number of all the banknotes having been handled, and an additional service charge based on the number of times rejection has occurred is set in the rate table. The service charge calculation unit 73 adds the additional service charge corresponding to the total number of times Rx, Ry rejection has occurred or the average number of times Axr, Axy rejection has occurred, to the reference charge, to calculate the service charge.

Also in a case where the service charge is calculated on the basis of the number of times rejection has occurred, a method for calculating the service charge is not limited to a method for calculating the service charge for banknote handling performed in one collection of sales proceeds, and may be, for example, a method for calculating the service charge by setting a predetermined time period such as one week or one month.

In a case where the service charge is calculated on the basis of the number of times rejection has occurred, not only the service charge is calculated on the basis of the total number of times rejection has occurred or the average number of times rejection has occurred, but also the service charge may be calculated according to a ratio of the number of times rejection has occurred, to the number of all the banknotes having been handled. In this case, for example, the service charge calculation unit 73 calculates a ratio of each number of times R1 to R3 rejection has occurred, to each number P1 to P3 of all the banknotes as shown in FIG. 4, and calculates the service charge, based on the ratio, with reference to a dedicated rate table which has been prepared in advance. Specifically, a reference charge is set according to the number of all the banknotes, and an additional service charge is set, according to the rejection ratio, in the rate table. The service charge calculation unit 73 adds the additional service charge based on the rejection ratio, to the reference charge, to calculate the service charge.

In a case where Company X and Company Y are each billed for a service charge when the service charge is set to be calculated on the basis of the total number of unfit notes in banknote handling performed in one collection of sales proceeds, the service charge calculation unit 73 calculates the total number Ux, Uy of unfit notes as indicated in "the total number of unfit notes" on the upper side in FIG. 7B with reference to the banknote handling data 91 shown in FIG. 4. The total number Ux of unfit notes that have occurred in handling sales proceeds for Company X is a total value of the number U1 of unfit notes that have occurred in handling sales proceeds collected from Store A (101) and the number U2 of unfit notes that have occurred in handling sales proceeds collected from Store B (102). The total number Uy of unfit notes that have occurred in handling sales proceeds for Company Y is the number U3 of unfit notes that have occurred in handling sales proceeds collected from the store 103. The service charge calculation unit 73 calculates the service charge for Company X and the service charge for Company Y on the basis of the calculated total number Ux, Uy of unfit notes with reference to a dedicated rate table which has been prepared in advance.

In a case where Company X and Company Y are each billed for a service charge when the service charge is set to be calculated on the basis of the average number of unfit notes in the banknote handling performed in one collection of sales proceeds, the service charge calculation unit 73 calculates the average number Axu, Ayu of unfit notes as indicated in "the average number of unfit notes" on the lower side in FIG. 7B with reference to the banknote handling data 91 shown in FIG. 4. The average number Axu of unfit notes that have occurred in handling sales proceeds for Company X is obtained by the total number Ux of unfit notes being divided by two that is the number of times of banknote handling. The average number Ayu of unfit notes that have occurred in handling sales proceeds for Company Y is obtained by the total number Uy of unfit notes being divided by one that is the number of times of banknote handling. The service charge calculation unit 73 calculates the service charge on the basis of the calculated average number Axu, Ayu of unfit notes with reference to a dedicated rate table that has been prepared in advance.

In a case where the service charge is calculated on the basis of the number of unfit notes, for example, a reference charge is set on the basis of the number of all the banknotes that have been handled, and an additional service charge corresponding to the number of unfit notes is set in the rate table. The service charge calculation unit 73 adds the additional service charge corresponding to the total number Ux, Uy of unfit notes or the average number Axu, Ayu of unfit notes, to the reference charge, to calculate the service charge.

Also in a case where the service charge is calculated on the basis of the number of unfit notes, a method for calculating the service charge is not limited to a method for calculating the service charge for banknote handling performed in one collection of sales proceeds, and may be, for example, a method for calculating the service charge by setting a predetermined time period such as one week or one month.

In a case where the service charge is calculated on the basis of the number of unfit notes, not only the service charge is calculated on the basis of the total number of unfit notes or the average number of unfit notes but also the service charge may be calculated according to a ratio of the number of unfit notes to the number of all the banknotes having been handled. In this case, for example, the service charge calculation unit 73 calculates a ratio of each number U1 to U3 of unfit notes to each number P1 to P3 of all the banknotes shown in FIG. 4, and calculates the service charge corresponding to the ratio with reference to a dedicated rate table which has been prepared in advance. Specifically, a reference charge is set according to the number of all the banknotes, and an additional service charge corresponding to the ratio of unfit notes is set in the rate table. The service charge calculation unit 73 adds the additional service charge corresponding to the ratio of unfit notes, to the reference charge, to calculate the service charge.

In the banknote handling apparatus 1, a service charge for banknote handling is calculated so as to correspond to labor such as labor represented by a handling time of the banknote handling. In addition thereto, a service charge for transfer by an armored car may be set to be calculated. For example, a rate table, in which correspondence between transfer distances and service charges is set, is prepared in advance in the service charge calculation setting 92 in the memory unit 90. When a transfer distance to a cash center from a store that is a collection source is inputted by using the operation/display unit 60 or the operation terminal 2, the service charge calculation unit 73 calculates a transfer service charge corresponding to the distance with reference to the rate table. In the banknote handling apparatus 1, the transfer service charge can be set to be handled separately from the service charge for the banknote handling, or the total amount of the transfer service charge and the service charge for the banknote handling may be set to be handled as the service charge.

The transfer service charge can be also calculated on the basis of information other than the distance. For example, the transfer service charge can be set to be calculated on the basis of difference in altitude between a store and a cash center, or the transfer service charge can be set to be calculated on the basis of a time that has been required for transfer from a store to a cash center. A rate table, in which correspondence between charges and differences in altitude is set, is prepared in advance. When the difference in altitude is inputted by using the operation/display unit 60 or the operation terminal 2, the service charge calculation unit 73 calculates the transfer service charge corresponding to the difference in altitude with reference to the rate table. Similarly, a rate table, in which correspondence between charges and transfer times is set, is prepared in advance. When the transfer time is inputted by using the operation/display unit 60 or the operation terminal 2, the service charge calculation unit 73 calculates the transfer service charge corresponding to the transfer time with reference to the rate table. For inputting information such as the transfer distance, the transfer time, and the difference in altitude, data obtained from a GPS (Global Positioning System) may be used. For example, a recording device for recording GPS data is mounted to a storage container for banknotes, to record GPS data while sales proceeds are being transferred. The recording device is connected to the operation terminal 2, and the operation terminal 2 calculates the transfer distance, the transfer time, the difference in altitude, or the like from the GPS data, to input it to the banknote handling apparatus 1.

Furthermore, when the transfer service charge is calculated, the service charge can be set to be corrected. For example, the service charge may be set to be corrected according to a weather including a temperature, a humidity, a precipitation, a snowfall, and the like, or the service charge may be set to be corrected according to whether or not warning for typhoon, photochemical smog, snow accumulation, or the like has been issued. For example, a rate table, in which correspondence between: a temperature, a humidity, a precipitation, a snowfall, a kind of warning; and additional service charges is set, is prepared in advance. The operation terminal 2 is connected to the Internet, and information is obtained from a website that provides information of a temperature, a humidity, a precipitation, snow accumulation, warning, and the like. When the information obtained by the operation terminal 2 is inputted to the banknote handling apparatus 1, the service charge calculation unit 73 adds the additional service charge to the service charge on the basis of the inputted information with reference to the rate table, to correct the service charge.

In the cash center, the sales proceeds collected from a plurality of stores are handled. A time required for the banknote handling varies depending on the number of stores from which the sales proceeds are collected, a monetary amount of sales proceeds collected from the stores, the number of banknotes of the sales proceeds, and the like. For example, in a case where handling of all the sales proceeds is less likely to be ended in business hours of the cash center, the number of staff members needs to be increased for the handling. Therefore, a technique for predicting a time required for banknote handling has been expected. The banknote handling apparatus 1 allows a time required for banknote handling to be predicted.

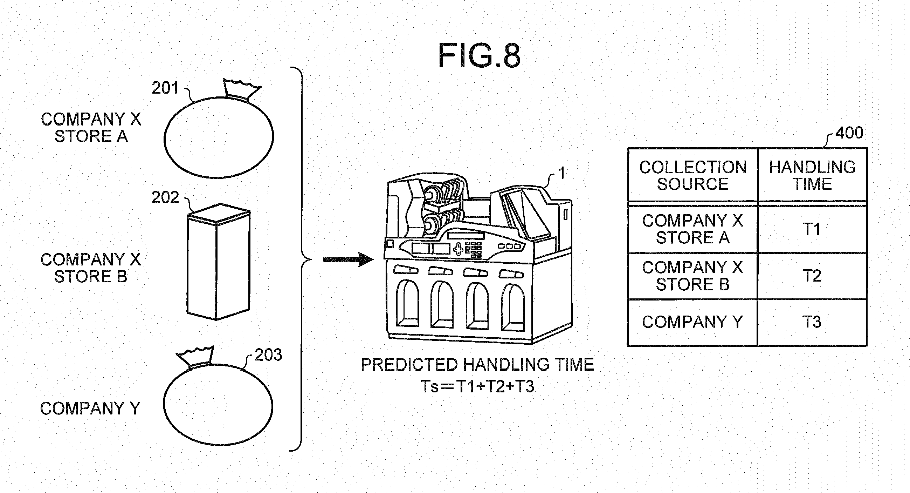

FIG. 8 is a schematic diagram for explaining a method of predicting a time required for banknote handling. A time required for banknote handling is stored for each banknote handling in the banknote handling data 91 in the memory unit 90, as shown in FIG. 4. The banknote handling apparatus 1 predicts a time required for banknote handling by using the information stored in the banknote handling data 91. Specifically, store information (customer information) of a store from which the sales proceeds are collected is inputted by using the operation/display unit 60 or the operation terminal 2. For example, as shown in FIG. 8, in a case where banknotes in the bag 201 collected from Store A of Company X, banknotes in the banknote cassette 202 collected from Store B of Company X, and banknotes in the bag 203 collected from the store of Company Y, are handled by the banknote handling apparatus 1, Store A of Company X, Store B of Company X, and the store of Company Y are inputted as the store information of the collection source.

The time calculation unit 72 extracts information of the collection sources which has been inputted, with reference to the banknote handling data 91 in the memory unit 90. An average value of the banknote handling times that have been required for handling the sales proceeds for each collection source is calculated. A handling time 400 shown in FIG. 8 indicates that the average value of banknote handling times for sales proceeds that were collected from Store A of Company X in the past, was T1. Similarly, the handling time 400 indicates that the average value of banknote handling times for sales proceeds that were collected from Store B of Company X, was T2, and the average value of banknote handling times for sales proceeds that were collected from the store of Company Y, was T3. The time calculation unit 72 calculates a time Ts required for handling all the sales proceeds in the collected storage containers 201 to 203, as T1+T2+T3, on the basis of the average values T1 to T3, as shown in FIG. 8. The predicted handling time Ts having been calculated is displayed on the screen of the operation/display unit 60 and the screen of the operation terminal 2.

Not only a time required for handling all the sales proceeds is displayed as the predicted handling time, but also the predicted handling time may be set to be displayed for each company or each store. In a case where the predicted handling time is set to be displayed for each company, the total value of the average values T1 and T2 is displayed as the predicted handling time required for handling sales proceeds for Company X, and the average value T3 is displayed as the predicted handling time required for handling the sales proceeds for Company Y. In a case where the predicted handling time is set to be displayed for each store, T1 is displayed as the predicted handling time required for handling the sales proceeds for Store A of Company X, T2 is displayed as the predicted handling time required for handling the sales proceeds for Store B of Company X, and T3 is displayed as the predicted handling time required for handling the sales proceeds for the store of Company Y.

Not only the average value of the banknote handling times used for calculating the predicted handling time is an average value calculated by extracting all the data stored for a collection source, but also the average value may be set to be calculated by extracting only data corresponding to a certain day of week. Specifically, for example, when a day on which the predicted handling time is calculated is Monday, only data for Monday among the data stored in the banknote handling data 91 is extracted to calculate the average value of the banknote handling times, and the average value is used to calculate the predicted handling time. In a case where the sales proceeds collected from a store greatly vary depending on day of week, when the average value is set to be calculated by limiting day of week, an accuracy for obtaining the predicted handling time can be enhanced.

Thus, the banknote handling apparatus 1 calculates the average handling time for banknotes on the basis of the banknote handling data 91 having been stored in the previous banknote handling, and calculates the predicted handling time that is likely to be required for banknote handling, on the basis of the average handling time. A staff member in charge or a managing staff member in the cash center is allowed to increase the number of the banknote handling apparatuses 1 to be operated, or the number of the staff members in charge of the banknote handling, on the basis of the predicted handling time displayed on the screen.

As described above, the banknote handling apparatus 1 according to the present embodiment can calculate a service charge corresponding to labor. Thus, in a case where, although the same number of banknotes are handled, labor for banknote handling increases, an appropriate service charge corresponding to the labor can be collected.

### [Embodiment 2]

A service charge calculation system according to embodiment 2 is different from that of embodiment 1 in that an operation terminal calculates a service charge in embodiment 2. Also in the service charge calculation system according to embodiment 2, similarly to embodiment 1, a service charge can be calculated on the basis of a time that has been required for banknote handling, and the like. In embodiment 2, the contents common to embodiment 1 will be described with reference to the drawings for embodiment 1. Furthermore, in embodiment 2, functions and structures, of the service charge calculation system, which are different from those of embodiment 1, will be mainly described.

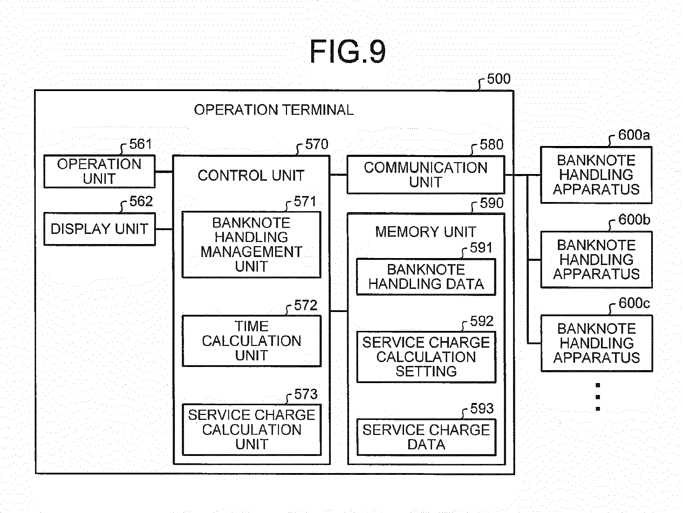

FIG. 9 is a block diagram illustrating a structure of the service charge calculation system according to embodiment 2. The service charge calculation system includes an operation terminal 500, and a plurality of banknote handling apparatuses 600 (600a, 600b, 600c) that are connected to the operation terminal 500 so as to be able to communicate with the operation terminal 500 through a communication unit 580. In FIG. 9, three banknote handling apparatuses 600 are shown. However, the number of the banknote handling apparatuses 600 connected to the operation terminal 500 is not particularly limited.

The operation terminal 500 includes an operation unit 561, a display unit 562, a control unit 570, the communication unit 580, and a memory unit 590. For example, a computer device is used as the operation terminal 500. The operation unit 561 functions as an input unit, such as a keyboard, a mouse, or a barcode reader, which allows input of information. Various kinds of information concerning instructions and setting is inputted by using the operation unit 561. The display unit 562 is implemented by a liquid crystal display or the like and has a function of outputting/displaying information. The communication unit 580 has a function of communicating with an external device. By using the communication unit 580, the plurality of banknote handling apparatuses 600 can be connected to the operation terminal 500 so as to be able to communicate with the operation terminal 500 over, for example, a network.

The memory unit 590 is a non-volatile storage device that includes a semiconductor memory and the like. As shown in FIG. 9, in the memory unit 590, banknote handling data 591, service charge calculation setting 592, and service charge data 593 are stored. The banknote handling data 591 represents data in which information about banknote handling performed by each banknote handling apparatus 600 is stored. The operation terminal 500 obtains information about banknote handling performed by each banknote handling apparatus 600, through the communication unit 580, from the banknote handling apparatus 600, and stores the information in the banknote handling data 591. The service charge calculation setting 592 represents data in which setting for calculating a service charge is stored. The service charge data 593 represents data in which information about a service charge calculated by the operation terminal 500 is stored. In addition thereto, the memory unit 590 is used to store various programs and temporary data.

The control unit 570 controls each component by using the program and the data stored in the memory unit 590, and allows the functions and the operations according to the present embodiment to be implemented. The control unit 570 includes a banknote handling management unit 571, a time calculation unit 572, and a service charge calculation unit 573.

The banknote handling management unit 571 manages banknote handling information including the number and a monetary amount of handled banknotes for each denomination, the number and a monetary amount of all the banknotes, and the like, on the basis of a result of the banknote handling by the banknote handling apparatus 600. The banknote handling information managed by using the banknote handling management unit 571 is stored in the banknote handling data 591 in the memory unit 590.

The time calculation unit 572 detects a predetermined operation or a predetermined process, which has been preset, to calculate a time that has been required for banknote handling. In a case where an operation or a process representing a start time of banknote handling, and an operation or a process representing an end time of the banknote handling are preset, the time calculation unit 572 detects the start time and the end time for the banknote handling on the basis of the setting, to calculate a time. The time calculated by the time calculation unit 572 is stored in the banknote handling data 591 in the memory unit 590.

The service charge calculation unit 573 calculates a service charge on the basis of: the banknote handling data 591 in which information of a banknote handling time calculated by the time calculation unit 572, and the like is stored; and the service charge calculation setting 592 that has been prepared in advance.

The banknote handling apparatus 600 has the same structure as the banknote handling apparatus 1 shown in FIG. 2. Banknote handling such as counting of sales proceeds can be performed by using the banknote handling apparatus 600 as described for embodiment 1. As the function for calculating a service charge, the banknote handling apparatus 600 may have the structure shown in FIG. 3, or the banknote handling apparatus 600 may not have a function of calculating a service charge. That is, the banknote handling apparatus 600 may be a banknote handling apparatus that has been conventionally used.

When banknote handling is performed in a cash center, a staff member in charge of the handling operates the operation terminal 500 or the banknote handling apparatus 600 to input store information (customer information) representing a store from which sales proceeds have been collected, and a monetary amount of the sales proceeds collected from the store. When an input operation for the sales proceeds has been performed, the operation terminal 500 recognizes the input operation and starts measuring the banknote handling time.

Subsequently, the staff member in charge takes out banknotes from a banknote storage container such as a bag, and operates the banknote handling apparatus 600 to recognize/count the banknotes. The staff member in charge continues an operation of taking out banknotes from the banknote storage container and continues recognition/counting of the banknotes by the banknote handling apparatus 600. When all the banknotes stored in the banknote storage container have been recognized/counted, the staff member in charge performs a predetermined operation by using the banknote handling apparatus 600 or the operation terminal 500 to end the recognition/counting. When recognition/counting has been ended, a result of recognition/counting of the total monetary amount and the like is displayed on a screen of the display unit 562 of the operation terminal 500 or an operation/display unit of the banknote handling apparatus 600. The staff member in charge confirms that a monetary amount of the sales proceeds which has been previously inputted matches with the total monetary amount of the banknotes counted by the banknote handling apparatus 600, and performs an operation of confirming the result of counting by using the operation terminal 500.

When the staff member in charge has performed the confirmation operation, the operation terminal 500 that has recognized the confirmation operation ends measurement of the banknote handling time. The operation terminal 500 calculates the service charge on the basis of the measured handling time. The calculated service charge can be confirmed on the screen of the operation terminal 500.

Thus, the operation terminal 500 has a function of detecting a predetermined operation or a predetermined process, and measuring a time which has been required for handling the banknotes. The operation terminal 500 calculates the service charge on the basis of the measured handling time. The operation terminal 500 measures banknote handling of each banknote handling apparatus 600, and calculates a service charge for each banknote handling. Also in a case where banknote handling for one collection of sales proceeds is performed by a plurality of the banknote handling apparatuses 600 in parallel, the operation terminal 500 monitors each banknote handling, measures the times, and calculates the service charge for the one collection.

For example, when a calculation expression for calculating a service charge is preset, the operation terminal 500 substitutes the measured handling time into the calculation expression to calculate the service charge. Furthermore, for example, when a rate table, in which correspondence between handling times and service charges is set, is prepared in advance, the operation terminal 500 calculates the service charge with reference to the rate table.

The service charge calculation system that includes the banknote handling apparatus 600 and the operation terminal 500 detects a predetermined operation or a predetermined process which represents the start of banknote handling, and a predetermined operation or a predetermined process which represents the end of the banknote handling, and measures a time from the start of the handling to the end of the handling. The service charge calculation system calculates the service charge on the basis of: the measured time; and the service charge calculation setting, such as a calculation expression and a rate table, which has been prepared in advance. In a case where, although the same number of banknotes are handled, the time for the handling increases, the service charge corresponding to the time is calculated.

Similarly to the service charge calculation system according to embodiment 1, the operation terminal 500 can be set to correct the banknote handling time as necessary. In a case where time correction is set to be performed, after the banknote handling has been ended, the time calculation unit 572 corrects the banknote handling time with reference to the banknote handling data 591 as described for embodiment 1. The time calculation unit 572 stores the corrected banknote handling time in the banknote handling data 591. Thus, as shown in FIG. 4, the banknote handling data 591 is stored. However, the banknote handling data 591 of the present embodiment includes an item of apparatus identification information in addition to the items shown in FIG. 4. In this item, the apparatus identification information for identifying the banknote handling apparatus 600, among the plurality of the banknote handling apparatuses 600, which has performed the banknote handling, is stored.

Furthermore, the service charge calculation unit 573 calculates the service charge on the basis of the banknote handling data 591 and the service charge calculation setting 592 which are stored in the memory unit 590. In the cash center, banknote handling for the sales proceeds is performed, and the banknote handling data 591 is stored. In this state, the service charge calculation unit 573 calculates the service charge. For example, the service charge is calculated on the basis of: the total time which has been required for the banknote handling; or the average time thereof, with reference to a rate table which has been prepared in advance. The calculation of the service charge is the same as described for embodiment 1 with reference to FIGS. 5A to 5C. That is, the service charge calculation unit 573 of the operation terminal 500 calculates the service charge in the same manner as that by the service charge calculation unit 73 of the banknote handling apparatus 1.

After calculating the service charge, the service charge calculation unit 573 stores the calculated service charge and information about the service charge, in the service charge data 593 in the memory unit 590. Thus, as shown in FIG. 6, the service charge data 593 is stored. However, the service charge data 593 according to the present embodiment includes an item of the apparatus identification information in addition to the items shown in FIG. 6. In this item, the apparatus identification information for identifying the banknote handling apparatus 600, among the plurality of the banknote handling apparatuses 600, which has performed the banknote handling, is stored.

Furthermore, the operation terminal 500 can be set to calculate the service charge on the basis of information other than the banknote handling time. For example, the operation terminal 500 calculates the service charge on the basis of the total number of times rejection has occurred or the average number of times rejection has occurred. Furthermore, for example, the operation terminal 500 calculates the service charge on the basis of the total number of unfit notes or the average number of unfit notes. The calculation of the service charge is the same as described for embodiment 1 with reference to FIGS. 7A and 7B.

The operation terminal 500 calculates the service charge, for banknote handling, corresponding to labor, for example, corresponding to the handling time of the banknote handling. In addition thereto, the operation terminal 500 can be set to calculate a service charge for transfer by an armored car according to a transfer distance, difference in altitude, a transfer time, or the like. Furthermore, when the transfer service charge is calculated, the service charge may be set to be corrected according to a temperature, a humidity, a precipitation, snowfall, or the like. Furthermore, the service charge can be set to be corrected according to whether or not warning for typhoon, photochemical smog, snow accumulation, or the like has been issued. The calculation and setting for the service charge are also the same as described for embodiment 1.

The operation terminal 500 can predict a time required for banknote handling. A time which was required for banknote handling performed by each banknote handling apparatus 600 is stored for each banknote handling in the banknote handling data 591 in the memory unit 590. The operation terminal 500 predicts a time required for banknote handling by using the information stored in the banknote handling data 591. When store information (customer information) of a store from which sales proceeds are collected, is inputted, the time calculation unit 572 extracts information of the collection source which has been inputted, with reference to the banknote handling data 591 in the memory unit 590. The average value of the banknote handling times which were required for handling sales proceeds of each collection source, is calculated. The time calculation unit 572 calculates a predicted time required for handling the sales proceeds, on the basis of the average value. The handling is the same as described for embodiment 1 with reference to FIG. 8.

As described above, the operation terminal 500 according to the present embodiment can calculate a service charge corresponding to labor of banknote handling performed by each banknote handling apparatus 600. Thus, in a case where, although the same number of banknotes is handled, labor for banknote handling increases, an appropriate service charge corresponding to the labor can be collected.

In the service charge calculation system according to the present embodiment, the operation terminal 500 calculates a service charge on the basis of, for example, a time that has been required for banknote handling. Therefore, the service charge can be calculated for the banknote handling performed by the banknote handling apparatus 600 that has been conventionally used. Furthermore, the operation terminal 500 can calculate a service charge for each banknote handling apparatus and for each banknote handling, with respect to the plurality of the banknote handling apparatuses 600.

Furthermore, a plurality of the banknote handling apparatuses 600 may be grouped in advance, to be registered in the service charge calculation setting 592, and the service charge calculation unit 573 of the operation terminal 500 can be set to calculate a service charge on the basis of: a service charge for banknote handling performed by each apparatus that belongs to the group; or the handling time required therefor.

For example, in a case where a large amount of banknotes collected from one store are handled by a plurality of the banknote handling apparatuses 600, setting may be such that the apparatuses are grouped in advance, service charges for banknote handling performed by the respective apparatuses are calculated, and the service charges by the respective apparatuses are added, to calculate the service charge for which the store is billed. The service charges for banknote handling performed by the respective apparatuses may be set to be compared with each other, to bill the store for the service charge with the highest value or for the service charge with the lowest value. An average value of the service charges by all the apparatuses can be set to be calculated on the basis of the service charges for banknote handling performed by the respective apparatuses, to bill the store for the service charge based on the average value.

Furthermore, a service charge for which the store is billed may be set to be calculated on the basis of the total time obtained as a sum of handling times for banknote handling performed the respective apparatuses. The handling times for banknote handling performed by the respective apparatuses may be set to be compared with each other, to bill the store for the service charge based on the longest handling time, or the service charge based on the shortest handling time. The average value of the handling times by all the apparatuses may be set to be calculated on the basis of the handling times for the banknote handling performed by the respective apparatuses, to bill the store for the service charge based on the average value.

Furthermore, setting may be such that a handling time for each banknote in each apparatus is calculated and the handling times are compared with each other, to bill the store for the service charge based on the handling time representing the greatest value or the service charge based on the handling time representing the least value. The average value of one-banknote-based handling times of all the apparatuses can be set to be calculated on the basis of the handling time for each banknote in each apparatus, to bill the store for the service charge based on the average value.

Furthermore, setting may be such that the number of banknotes handled per unit time (for example, one minute) in each apparatus is calculated, and the numbers of the banknotes are compared with each other, to bill the store for the service charge based on the number of handled banknotes which represents the greatest value or the service charge based on the number of handled banknotes which represents the least value. The average value of the unit-time-based numbers of banknotes handled by all the respective apparatuses may be set to be calculated on the basis of the number of handled banknotes per unit time in each apparatus, to bill the store for the service charge based on the average value.

Furthermore, one of a plurality of the banknote handling apparatuses 600 which have been grouped can be set to be selected in advance, to bill the store for the service charge based on a service charge calculated by the one of the apparatuses. For example, when an apparatus that serves as a reference is selected on the basis of the skill levels of the staff members in charge of the banknote handling apparatuses 600, an appropriate service charge corresponding to labor that has been required for banknote handling can be calculated without influence of the skill level.

In the above-described embodiment 1 and embodiment 2, when a service charge is calculated, the average value of banknote handling times, the average value of the numbers of times rejection has occurred, the average value of the numbers of unfit notes, or the like is used as an example. However, in another embodiment, a median value or a mode value may be used instead of the average value. A value, among the average value, the median value, and the mode value, to be used can be set in the service charge calculation setting 92.

In the above-described embodiments, the time or the service charge is corrected on the basis of the skill level of a staff member in charge in order to reduce influence of the skill level of the staff member in charge. In addition thereto, the banknote handling apparatus 1 and the operation terminal 500 have a function of inhibiting variation of the banknote handling time due to the staff member in charge. For example, in a case where handling needs to be halted halfway, when a staff member in charge performs a predetermined operation for instruction for halting the handling, by using the banknote handling apparatus 1, 600 or the operation terminal 2, 500, the time calculation unit 72, 572 halts measurement of the time. When the staff member in charge performs a predetermined operation for instruction for resuming the handling, by using the banknote handling apparatus 1, 600 or the operation terminal 2, 500, the time calculation unit 72, 572 resumes measurement of the time. In a case where the starting time and the ending time are recorded, to calculate the handling time, a time of the halting is subtracted from the time calculated from the starting time and the ending time, to calculate the handling time. For example, in a case where the staff member in charge goes to the restroom, the measurement of the handling time is halted, whereby the handling time, for the banknote handling, calculated by the time calculation unit 72, 572 can be prevented from becoming longer than an actual handling time.

Furthermore, after the banknote handling has been started, although neither an operation for halting the banknote handling nor an operation for ending the banknote handling is performed, if a state where no banknotes are in the reception inlet 10 of the banknote handling apparatus 1, 600 continues for a predetermined preset time period or longer period, the control unit 70, 570 performs notification. Specifically, sound or light is emitted, and information indicating that the handling has been halted is displayed on the screen of the banknote handling apparatus 1, 600 or the operation terminal 2, 500, to warn the staff member in charge. Thus, a banknote handling time calculated by the time calculation unit 72, 572 can be prevented from becoming longer than an actual handling time due to the staff member in charge being careless. A time until the notification is performed can be changed by setting. Furthermore, in a case where the notification is performed, whether notification is to be performed while the time is being continuously measured by the time calculation unit 72, 572, or measuring of the time by the time calculation unit 72, 572 is to be automatically halted simultaneously when the notification is performed, can be selectively determined.

In the above-described embodiments, a time from input of a monetary amount of sales proceeds to confirmation of a result of recognition/counting of banknotes, is measured as the banknote handling time. However, the start time and the end time for measuring the banknote handling time can be changed by setting. For example, an operation for specifying instruction for the start of measuring of the banknote handling time and an operation for specifying instruction for the end of measuring of the banknote handling time may be performed by using the banknote handling apparatus 1, 600 or the operation terminal 2, 500, to measure a time from the operation of instruction for starting the measurement to the operation of instruction for ending the measurement. The contents of the handling and the operation, which are performed by the banknote handling apparatus 1, 600 and the operation terminal 2, 500, are different depending on a storage container with which sales proceeds are collected from a collection source, a method for inputting a monetary amount of the sales proceeds, a method for handling the sales proceeds, and the like. Therefore, the service charge calculation setting 92, 592 in the memory unit 90, 590 allows an operation or a process for specifying a start time of measuring the banknote handling time, and an operation or a process for specifying an end time of measuring the banknote handling time to be set for each collection source. When the store information of the collection source is inputted, the time calculation unit 72, 572 recognizes operations or processes to be detected as the start time and the end time of measuring the banknote handling time, with reference to the service charge calculation setting 92, 592. The banknote handling time is calculated on the basis of a result of detection of the recognized operation or handling.

In the above-described embodiments, an exemplary case where the service charge calculation system includes the banknote handling apparatus 1, 600 as the banknote handling unit for handling banknotes, has been described. The service charge calculation system may further include a coin handling apparatus as a coin handling unit for handling coins. The coin handling apparatus calculates a handling time for coin handling, and calculates a service charge on the basis of the handling time, with reference to, for example, a rate table, for coin handling, which has been prepared in advance, as in the same manner as described above for the banknote handling apparatus 1. Thus, also in a case where banknotes and coins are collected as sales proceeds, the banknote handling apparatus 1 and the operation terminal 500 calculate the service charge for the banknote handling, and the coin handling apparatus calculates the service charge for the coin handling, and a monetary amount obtained as a sum of the service charge for the banknote handling and the service charge for the coin handling can be calculated as a service charge for handling the sales proceeds.

As described above, the service charge calculation system according to the present embodiment allows a service charge for banknote handling to be calculated such that the service charge corresponds to labor that has been required for the banknote handling. Thus, in a case where, although the same number of banknotes are handled, labor for banknote handling increases, an appropriate service charge corresponding to the labor can be collected.

As described above, the service charge calculation system, the money handling apparatus, and the service charge calculation method according to the present invention are useful for collecting a service charge corresponding to labor for money handling.

As described above, the present invention is directed to a service charge calculation system that includes: a money handling unit configured to perform money handling for counting money; a time calculation unit configured to calculate a time for the money handling performed by the money handling unit; and a service charge calculation unit configured to calculate a service charge on the basis of the time calculated by the time calculation unit.

In the service charge calculation system, the time calculation unit calculates an average time on the basis of times for a plurality of money handlings, and the service charge calculation unit calculates the service charge on the basis of the average time.

In the service charge calculation system, the time calculation unit calculates the average time for each collection source from which the money is collected.

In the service charge calculation system, the average time is calculated from a plurality of money handlings performed in a predetermined preset time period.

In the service charge calculation system, the time calculation unit calculates a total time on the basis of times for a plurality of money handlings, and the service charge calculation unit calculates the service charge on the basis of the total time.

In the service charge calculation system, the time calculation unit calculates the total time for each collection source from which the money is collected.

In the service charge calculation system, the total time is calculated from a plurality of money handlings performed in a predetermined preset time period.

In the service charge calculation system, the time calculation unit detects a preset operation or a preset process, and calculates a time for the money handling on the basis of a result of detection during the money handling.

In the service charge calculation system, the service charge calculation unit calculates the service charge on the basis of a rate table in which correspondence between times for the money handling and service charges is preset.

In the service charge calculation system, the money handling unit includes a banknote handling unit configured to handle banknotes, and a coin handling unit configured to handle coins, the time calculation unit calculates a time for banknote handling performed by the banknote handling unit, and a time for coin handling performed by the coin handling unit, and the service charge calculation unit calculates a service charge for the banknote handling on the basis of the time for the banknote handling, and calculates a service charge for the coin handling on the basis of the time for the coin handling,

In the service charge calculation system, the service charge calculation unit calculates a service charge for the banknote handling on the basis of a rate table in which correspondence between times for the banknote handling and service charges is preset, and calculates a service charge for the coin handling on the basis of a rate table in which correspondence between times for the coin handling and service charges is preset.

In the service charge calculation system, a memory unit configured to store: information representing a collection source from which money handled in money handling has been collected; and a time for the money handling such that the information representing the collection source and the time for the money handling are associated with each other, is further provided. When receiving information representing a collection source from which money to be handled has been collected, the time calculation unit calculates a time required for handling the collected money to be handled, on the basis of a time for money handling, in which money collected from the collection source has been handled in past, stored in the memory unit.

In the service charge calculation system, when receiving information representing a plurality of collection sources, the time calculation unit calculates a total time required for handling money collected from the plurality of collection sources.

Furthermore, as described above, the present invention is directed to a money handling apparatus that includes: a reception inlet configured to receive money; a transport unit configured to transport the money received in the reception inlet; a recognition unit configured to recognize the money transported by the transport unit; a stacking unit configured to stack money on the basis of a result of recognition by the recognition unit; a money counting unit configured to count the money received in the reception inlet, on the basis of a result of recognition by the recognition unit; a time calculation unit configured to calculate a time for handling the money received in the reception inlet; and a service charge calculation unit configured to calculate a service charge on the basis of the time calculated by the time calculation unit.

Furthermore, as described above, the present invention is directed to a service charge calculation method for calculating a service charge by using a service charge calculation system, and the method includes: a step of performing money handling for counting money by using a money handling unit; a time calculation step of calculating a time for the money handling performed by the money handling unit; and a service charge calculation step of calculating a service charge on the basis of the time calculated in the time calculation step.

According to the present invention, a service charge can be calculated on the basis of labor required for money handling. For example, in a case where, although the same amount of money is handled, the money is in a bad condition and a time for handling the money thus increases, a service charge corresponding to the time is calculated, and the service charge corresponding to the labor can be collected.

Although the invention has been explained with respect to specific embodiments for a complete and clear disclosure, the appended claims are not to be thus limited but are to be construed as embodying all modifications and alternative constructions that may occur to one skilled in the art that fairly fall within the basic teaching of the claims.

## Claims

1. A service charge calculation system comprising:
a money handling unit (1) configured to perform money handling for counting money;
a time calculation unit (72) configured to calculate a time for the money handling performed by the money handling unit (1); and
a service charge calculation unit (73) configured to calculate a service charge on the basis of the time calculated by the time calculation unit (72).

2. The service charge calculation system according to claim 1, wherein
the time calculation unit (72) calculates an average time on the basis of times for a plurality of money handlings, and
the service charge calculation unit (73) calculates the service charge on the basis of the average time.

3. The service charge calculation system according to claim 2, wherein the time calculation unit (72) calculates the average time for each collection source from which the money is collected.

4. The service charge calculation system according to claim 2 or 3, wherein the average time is calculated from the plurality of money handlings performed in a predetermined time period.

5. The service charge calculation system according to claim 1, wherein
the time calculation unit (72) calculates a total time on the basis of times for a plurality of money handlings, and
the service charge calculation unit (73) calculates the service charge on the basis of the total time.

6. The service charge calculation system according to claim 5, wherein the time calculation unit (72) calculates the total time for each collection source from which the money is collected.

7. The service charge calculation system according to claim 5 or 6, wherein the total time is calculated from the plurality of money handlings performed in a predetermined time period.

8. The service charge calculation system according to any one of claims 1 to 7, wherein the time calculation unit (72) detects a preset operation or a preset process, and calculates the time for the money handling on the basis of a result of detection during the money handling.

9. The service charge calculation system according to any one of claims 1 to 8, wherein the service charge calculation unit (73) calculates the service charge on the basis of a rate table in which correspondence between times for the money handling and service charges is preset.

10. The service charge calculation system according to any one of claims 1 to 8, wherein
the money handling unit (1) includes a banknote handling unit configured to handle banknotes, and a coin handling unit configured to handle coins,
the time calculation unit (72) calculates a time for banknote handling performed by the banknote handling unit, and a time for coin handling performed by the coin handling unit, and
the service charge calculation unit (73) calculates a service charge for the banknote handling on the basis of the time for the banknote handling, and calculates a service charge for the coin handling on the basis of the time for the coin handling,

11. The service charge calculation system according to claim 10, wherein the service charge calculation unit (73) calculates the service charge for the banknote handling on the basis of a rate table in which correspondence between times for the banknote handling and service charges is preset, and calculates the service charge for the coin handling on the basis of a rate table in which correspondence between times for the coin handling and service charges is preset.

12. The service charge calculation system according to claim 1, wherein the money handling unit (1) includes
a reception inlet (10) configured to receive money;
a transport unit (20) configured to transport the money received in the reception inlet (10);
a recognition unit (30) configured to recognize the money transported by the transport unit (20);
a stacking unit (50) configured to stack money on the basis of a result of recognition by the recognition unit (30); and
a money counting unit (71) configured to count the money received in the reception inlet (10), on the basis of a result of recognition by the recognition unit (30).

13. A service charge calculation method for calculating a service charge by using a service charge calculation system, the method comprising:
performing money handling for counting money by a money handling unit (1);
calculating a time for the money handling performed by the money handling unit (1); and
calculating a service charge on the basis of the time calculated for the money handling.
